(19) Europäisches Patentamt
European Patent Office
Office européen des brevets

(11) **EP 2 669 655 A1**

(12) **EUROPEAN PATENT APPLICATION**
published in accordance with Art. 153(4) EPC

(43) Date of publication:
**04.12.2013 Bulletin 2013/49**

(51) Int Cl.:
***G01N 15/08*** (2006.01)

(21) Application number: **11856869.0**

(86) International application number:
**PCT/CN2011/085123**

(22) Date of filing: **31.12.2011**

(87) International publication number:
**WO 2012/100630 (02.08.2012 Gazette 2012/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2011 CN 201110030090**

(71) Applicants:
- **Commercial Aircraft Corporation Of China Ltd
Shanghai 200120 (CN)**
- **Shanghai Aircraft Manufacturing Co., Ltd
Shanghai 200436 (CN)**

(72) Inventors:
- **LIU, Weiping
Shanghai
200436 (CN)**
- **ZHANG, Dongmei
Shanghai
200436 (CN)**
- **MA, Xiaoxing
Shanghai
200436 (CN)**
- **LIU, Jun
Shanghai
200436 (CN)**
- **LI, Zhiyuan
Shanghai
200436 (CN)**
- **WANG, Xinjing
Shanghai
200436 (CN)**

- **ZHENG, Yizhu
Shanghai
200436 (CN)**
- **WANG, Xu
Shanghai
200436 (CN)**
- **SU, Jiazhi
Shanghai
200436 (CN)**
- **XIN, Chaobo
Haidian District
Beijing 100191 (CN)**
- **GU, Yizhuo
Haidian District
Beijing 100191 (CN)**
- **LI, Min
Haidian District
Beijing 100191 (CN)**
- **LI, Yanxia
Haidian District
Beijing 100191 (CN)**
- **ZHANG, Zuoguang
Haidian District
Beijing 100191 (CN)**

(74) Representative: **Bergmeier, Werner
Canzler & Bergmeier
Friedrich-Ebert-Straße 84
85055 Ingolstadt (DE)**

(54) **TESTING APPARATUS FOR TESTING GAS PERMEABILITY ON THICKNESS DIRECTION OF PLASTIC MATRIX**

(57) An apparatus for testing the gas permeability on the lateral direction of a resin matrix composite material layer, comprising: a mold (1), a loading apparatus (2), a temperature control apparatus (3), a vacuuming apparatus (6), and a flow detecting element (4). The mold (1) is constituted by at least a cavity and a covering plate sealing the cavity. Sealing elements are accommodated within the cavity. A test specimen is laid flat between the sealing elements and is sealed airtight by the sealing elements except for two ends of the test specimen on the lateral direction of the resin matrix composite material layer. An air inlet and an air outlet respectively are arranged on the mold (1) and correspond to the two ends of the test specimen not being sealed airtight, wherein the inlet is connected to the flow detecting element (4) and the outlet is connected to the vacuuming apparatus

**(Cont. next page)**

EP 2 669 655 A1

(6). By providing a force for air to move in a vacuumed cavity along the lateral direction of the pre-impregnated resin matrix composite material layer, the apparatus allows for testing of the air permeability of the pre-impreg-nated material along the lateral direction of the resin matrix composite material layer. Testing of air permeability of pre-impregnated material in solidification technique is allowed via adjustments of pressure and temperature.

**Fig. 5**

**Description**

**Field of the Invention**

The present invention relates to an apparatus and method for testing gas permeability, and more specifically, to an apparatus and method of testing gas permeability of a to-be-tested sample in a lateral direction of a plastic matrix by using gas as a fluid.

**Background of the Invention**

Permeability is a parameter characterizing the degree of difficulty of a fluid flowing through a porous medium under a pressure. The greater the permeability is, the smaller a resistance of the porous material against flow of the fluid is. During preparation of a resin-based composite material by using an autoclave or a vacuum bag process, permeability of a prepreg plastic matrix is one of crucial factors affecting discharge of entrained air and volatile components under the action of vacuum, and thus affects the forming quality of members made of the composite material to a certain degree. A prepreg system comprises a fiber reinforcement and a resin substrate. Hence, the permeability of the prepreg plastic matrix does not only depend on physical properties of the fiber and fiber network structure, but also relates to physical and chemical properties of the resin substrate. Currently, a method of testing permeability of a fiber plastic matrix by using a liquid as a fluid is getting mature, and there are documents and patents regarding the method. However, using the liquid to test the prepreg permeability has a lot of limitations: for example, (1) the prepreg system contains the resin substrate; if the liquid is used as a testing fluid, a flow front is difficult to be judged and thus permeability cannot be accurately tested; (2) the permeability of the prepreg plastic matrix is by far smaller than the permeability of the fiber plastic matrix. A flow of the liquid through prepreg is very small. On the one hand, the extremely small flow of the liquid between the plastic matrix and the testing mold during the testing procedure causes a substantial deviation in effect, and on the other hand, waste of time is caused. (3) the prepreg permeability in the composite material-forming process is mainly used to characterize the discharging capability of gases such as entrained air and volatile components under the action of vacuum, so there is a difference between use of the liquid as the testing fluid and actual situations. (4) During solidification, the prepreg plastic matrix is affected by temperature and pressure, so it is difficult for a conventional method to achieve on-line test of the permeability during the solidification.

As can be seen from the above, the apparatus and method of using a gas as a fluid to test the permeability of the prepreg plastic matrix are of important theoretical significance and high application value, and confronted with a certain technical difficulty. Accurate measurement cannot be achieved unless influences from many factors are taken into consideration together.

To this end, an object of the present invention is to provide a testing apparatus and method for testing gas permeability of a prepreg in the lateral direction of the plastic matrix, applied in the resin-based composite material.

**Summary of the Invention**

The present invention provides a testing apparatus for testing gas permeability in a lateral direction of a plastic matrix. Preferably, the apparatus is applied to the test of permeability of a prepreg in a resin-based composite material. The apparatus achieves the test of gas permeability of the prepreg in the lateral direction of the plastic matrix by providing in a cavity a power enabling a gas to move in the lateral direction of the prepreg plastic matrix. Measurement of the gas permeability of the prepreg in a solidifying process is achieved by regulating a pressure and temperature.

The present invention provides a testing apparatus for testing gas permeability in a lateral direction of a plastic matrix, comprising: a mold at least comprised of a cavity and a cover plate, a loading device for controlling a testing pressure, a temperature control device for controlling a testing temperature, a vacuum device for vaccumizing the cavity, and a flow detection element for detecting a gas flow, wherein the cover plate has an opening for receiving the loading device, the cavity and the cover plate forming an inner cavity, a sealing assembly being placed in the inner cavity and sealing the opening of the cover plate, a to-be-tested sample being laid flat between the sealing assembly and sealed airtight by the sealing assembly except both ends of the sample in the lateral direction of the plastic matrix. A gas inlet and a gas outlet are respectively arranged on the mold and correspond to said both ends of the sample not being sealed airtight, wherein the gas inlet is communicated with the flow detection element and the gas outlet is communicated with the vacuum device. After the vacuum device is started to make the pressure at the gas inlet higher than the pressure at the gas outlet, gas flows from the gas inlet, through the sample in the lateral direction of the plastic matrix of the sample, and then out of the gas outlet.

Specifically, the control temperature device at least comprises a heating rod.

Specifically, the vacuum device is a vacuum pump.

Preferably, a vacuum gauge is provided between the vacuum pump and the gas outlet.

Alternatively, the gas inlet and the gas outlet are provided on the cover plate, and the cover plate is fixed in the cavity.

Specifically, the sealing assembly comprises an upper sealing sheet and a lower sealing sheet.

Preferably, the sealing assembly comprises an upper sealing sheet, a lower sealing sheet and a pair of side sealing sheets located between the upper sealing sheet and the lower sealing sheet.

More preferably, the mold further comprises a porous material which is provided between the upper sealing sheet and the lower sealing sheet in an up-down direction and corresponds to both ends of the sample not being sealed airtight in the lateral direction of the plastic matrix. The porous material is provided between the side sealing sheets in the lateral direction of the plastic matrix.

More specifically, the porous material is a gas-permeable felt.

Specifically, the loading device has a loading flat panel and a loading body, wherein the loading flat panel is received in the opening of the cover plate, and the loading body applies a pressure to the loading flat panel.

More specifically, the loading body is a press.

Specifically, a recess is provided respectively on both sides of the sealing assembly and the cover plate at a location adjacent to an inner wall of the cavity.

Alternatively, the to-be-tested sample is a prepreg.

Alternatively, the to-be-tested sample is laid between the sealing assembly in a uni-directional laying manner, orthogonal laying manner, or a quasi-isotropic laying manner.

The testing apparatus for testing gas permeability of the prepreg in the lateral direction of the plastic matrix according to the present invention has the following advantages: (1) accurate test of the gas permeability of the prepreg in the lateral direction of the plastic matrix can be achieved under different pressure and temperature conditions; (2) the apparatus is adapted for a prepreg of various continuous fibers such as glass fiber, carbon fiber and aramid fiber as well as for various fabric prepregs; (3) the apparatus can achieve measurement of the gas permeability of the prepreg laid in different laying manners with different numbers of layers; (4) the apparatus exhibits a small measurement error and a high test reliability and a high repeatability; (5) the apparatus is simple, easily operable and time-saving.

The present invention further provides a method of measuring gas permeability, comprising the following steps:

(1) sealing the gas inlet of the mold and starting the vacuum device communicated with the gas outlet of the mold to inspect where there is gas leakage;

(2) applying a testing pressure to the sealing assembly with and without the to-be-tested sample by the loading device respectively and measuring a thickness h of the sample under the testing pressure, if the inspection result in step (1) is no gas leakage;

(3) setting a pressure of the vacuum device as P to form a differential pressure between the gas outlet and the gas inlet to enable the gas to flow, setting a temperature of the cavity as a testing temperature T via the temperature control device and obtaining a corresponding gas viscosity $\eta$, and detecting a gas flow rate Q via the flow detection element;

(4) calculating the permeability in the lateral direction according to a permeability calculating formula.

Specifically, the temperature-viscosity formula is $\dfrac{\eta}{\eta_0} = \left(\dfrac{T}{T_0}\right)^{\frac{3}{2}} \dfrac{T_0 + C}{T + C}$, wherein the pameters $T_0$ and $\eta_0$ respectively represent a reference temperature and a corresponding viscosity, and the parameter C represents a constant related to a gas type.

Specifically, the permeability calculating formula is $K = \dfrac{Q\eta l}{Phb}$, wherein the parameters $l$ and $b$ respectively represent a length and a width of the plastic matrix of the sample.

Preferably, the step (1) further comprises a step of using a sealing adhesive tape to seal gaps between the sealing assembly and the cavity.

Preferably, in the step (1), the vacuum device sets the pressure of the cavity as -0.1 MPa; if no pressure relief occurs after the vacuum device is switched off, there is no gas leakage.

Specifically, in the step (2), if a thickness as measured in a way that the loading device applies a pressure to the sealing assembly without the sample is set as h1 and a thickness as measured in a way that the loading device applies a pressure to the cavity with the sample is set as h2, the thickness h of the sample is h2-h1.

Specifically, in the step (3), a pressure P of the vacuum device is in a range of -0.1-0MPa.

**Brief Description of Drawings**

Exemplary embodiments of the present invention will be described hereunder with reference to the drawings to make the present application apparent. Among the figures,

**Fig.1**    is a structural view of a cavity of a testing apparatus for testing gas permeability in a lateral direction of a plastic matrix;

**Fig.2**    is a structural view of a sealing cover plate of the testing apparatus for testing gas permeability in a lateral direction of the plastic matrix;

**Fig.3**    is a view for assembling a testing mold of the testing apparatus for testing gas permeability in a lateral direction of the plastic matrix;

**Fig.4**    is an exploded view of Fig.3;

**Fig.5**    is a view showing assembling of the testing apparatus for testing gas permeability in a lateral direction of the plastic matrix;

**Fig.6**    is a curve diagram showing a gas permeability of carbon fiber/epoxy 914 resin prepreg in a lateral direction of the plastic matrix, and a testing pressure;

**Fig.7**    is a curve diagram showing a gas permeability of T700 carbon fiber/ bismaleimide resin uni-directional prepreg in a lateral direction of the plastic matrix, and a testing pressure.

Wherein reference numbers in the figures denote the following features:

| | |
|---|---|
| 1 | testing mold |
| 2 | loading device |
| 3 | temperature control device |
| 4 | flow meter |
| 5 | vacuum gauge |
| 6 | vacuum pump |
| 7 | gas duct |
| 21 | loading flat panel |
| 10 | to-be-tested sample |
| 11 | cavity |
| 111 | threaded hole |
| 112 | locking bolt |
| 113 | heating rod hole |
| 114 | heating rod |
| 12 | sealing cover plate |
| 121 | through hole |
| 122 | recess |
| 123 | gas inlet |
| 124 | gas outlet |
| 125 | central opening |
| 131 | upper sealing sheet |
| 132 | lower sealing sheet |
| 133 | side sealing sheet |
| 134 | porous material |

**Detailed Description of Preferred Embodiments**

The present invention will be further described in detail with reference to the figures.

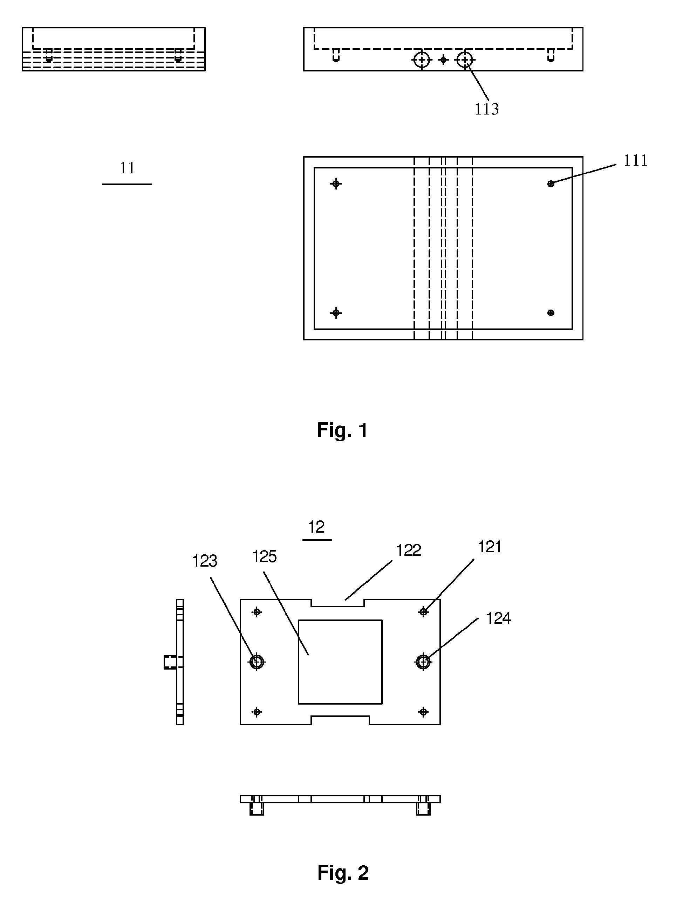

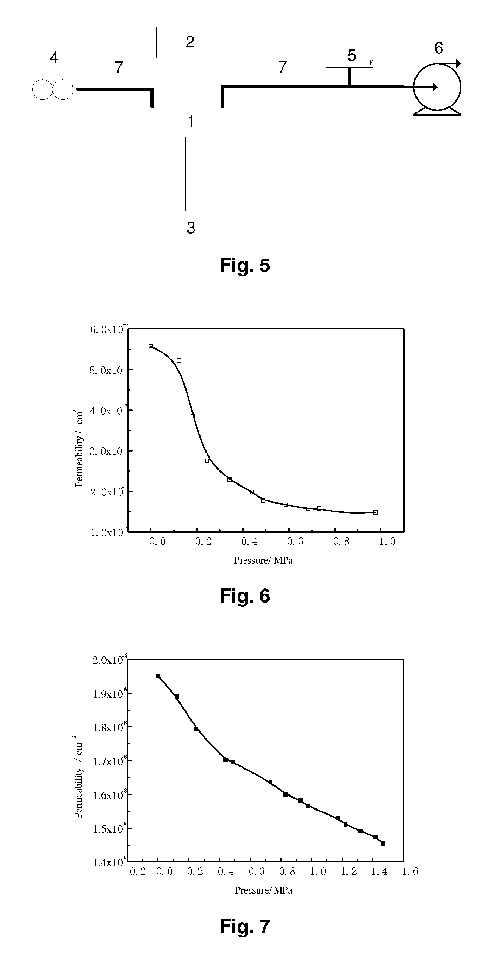

The present invention provides a testing apparatus for testing gas permeability of a to-be-tested sample 10 in a lateral direction of a plastic matrix. As shown in Fig.5, the testing apparatus comprises a testing mold 1, a loading device 2, a temperature control device 3, a flow detection element 4, a vacuum detection element 5 and a vaccumizing device 6. Specifically, the flow  detection element 4 is a flow meter, the vacuum detection element 5 is a vacuum gauge, and the vacuum device 6 is a vacuum pump. In combination with Fig.1-Fig.4, the flow meter 4 is connected to a gas inlet 123 of the testing mold 1 via a gas duct 7, a gas outlet 124 of the testing mold 1 is connected to the vacuum gauge 5 and the vacuum pump 6 via the gas duct 7, a heating rod 114 of the testing mold 1 performs temperature control via the temperature control device 3, and the temperature control device 3 is preferably a temperature control meter. The loading device 2 comprises a loading flat panel 21 and a loading body, wherein the loading body applies a pressure to a plastic matrix of the to-be-tested sample 10 via the loading flat panel 21, and the loading body 21 is preferably a press machine.

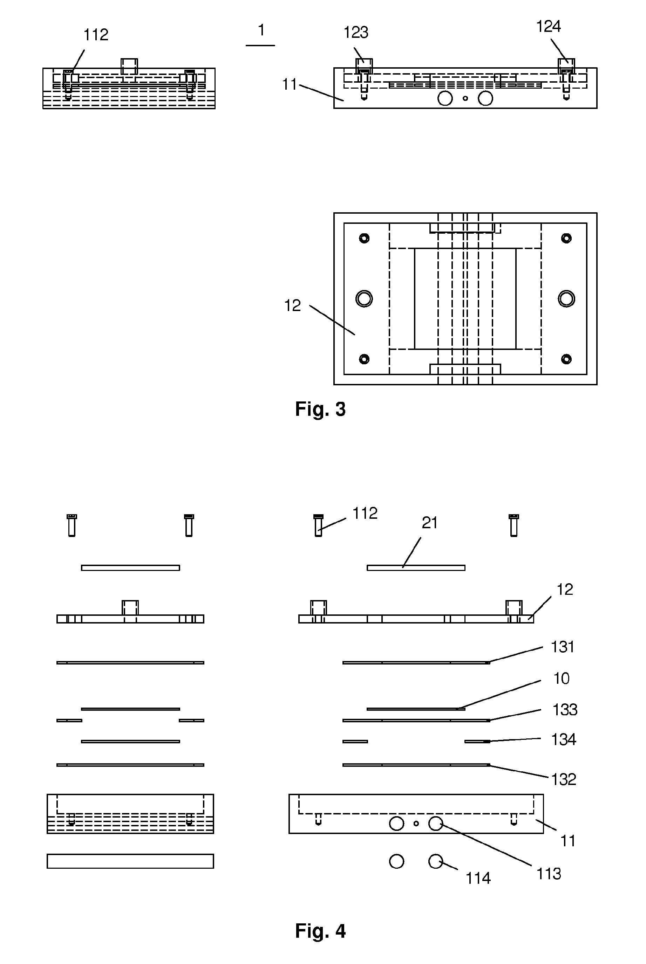

The testing mold 1 comprises a cavity 11 and a sealing cover plate 12, wherein the cavity 11 is as shown in Fig.1, a bottom of the cavity is provided with four threaded holes 111, and two heating rod holes 113 are provided below. Referring to Fig.4, in a receiving space of the cavity 11, an upper sealing sheet 131, a porous material 134 and side sealing sheets 133 and a lower sealing sheet 132 are received there one by one from upside to downside, wherein the loading flat panel 21 passes through a central opening 125 provided in the sealing cover plate 12 and flatly presses the upper sealing sheet 131 of the cavity 11, and can transfer a loading pressure evenly to the to-be-tested sample 10 and effectively control a compression area of the to-be-tested sample 10. The heating rods 114 are respectively provided in the cavity 11 through heating rod holes 113. The upper sealing sheet 131 and the lower sealing sheet 132 are provided opposite to each other and have substantially the same shape. Two side sealing sheets 133 are longitudinal provided between the upper sealing sheet 131 and the lower sealing sheet 132 and laterally located respectively on one side and the other side relative to the upper sealing sheet 131 or the lower sealing sheet 132. Gas tightness is provided between the upper sealing sheet 131 and the side sealing sheets 133 and between the side sealing sheets 133 and the lower sealing sheet 132. Two porous materials 134 are provided at gaps of left and right ends  formed by the upper sealing sheet 131, the lower sealing sheet 132 and the two side sealing sheets. The to-be-tested sample 10 is laid flat in the space formed by the upper sealing sheet 131, the lower sealing sheet 132, side sealing sheets 133 and the porous material 134. A gas inlet 123 and a gas outlet 124 are respectively provided at both ends of the sealing cover plate 12, through holes 121 are provided on the sealing cover plate 12 and connected to the threaded hole 111 of the cavity 11 via a locking bolt 112. The locking bolt 112 is used to apply compression to the sealing sheets to divide the cavity 11 into two independent subcavities. Recesses are provided on both sides of each of the sealing cover plate 12, the upper sealing sheet 131, side sealing sheets 133 and the lower sealing sheet 132 at a location adjacent to the wall of the cavity. Such design facilitates use of a sealing adhesive tape to eliminate the gaps between the sealing sheets and the cavity wall to ensure the two subcavities isolated from each other and prevent flow of gas through the gaps.

The upper sealing sheet 131, the lower sealing sheet 132 and side sealing sheets 133 constitute a sealing assembly of the present invention. However, those skilled in the art can appreciate that the sealing assembly may only have the upper sealing sheet and the lower sealing sheet. In such design, both of the upper and lower sealing sheets have side sealing ends which engage with each other to perform the function of the above side sealing sheets 133, but the gas tightness effect of such design is worse than that of the sealing assembly having side sealing sheets 133.

In the present invention, the to-be-tested sample 10 is a pregreg applied to a resin-based composite material. Fibers in the prepreg may be glass fibers, carbon fibers, aramid fibers or basalt fibers; a prepreg reinforcement may be a uni-directional fiber or fiber fabric, wherein the fiber fabric may be plain fabric, twill fabric, satin fabric or the like; the resin in the prepreg may be epoxy resin, phenolic resin, cyanate ester resin, bismaleimide resin or the like.

The present invention can be used to test gas permeability of a resin-based composite material pregreg in a lateral direction of a plastic matrix. Specific operations are as follows:

Preparation of sample

At first, the pregreg is cut into pieces with a size $10 \times 10 cm^2$, then the pieces are laid in a superimposed manner according to a laying manner and the number of layers to form a prepreg plastic matrix, wherein the laying manner may be uni-directional laying, orthogonal laying, quasi-isotropic laying or the like, and the number of layers is set according to the testing requirement.

Packaging of sample

The lower sealing sheet 132 is laid flat in the cavity 11 first, then the duly-superimposed prepreg 10 is placed on the lower sealing sheet 132, and then side sealing sheets 133 are placed close to the prepreg 10. Although the prepreg is very close to the side sealing sheets 133 during the packaging, but complete sealing cannot be achieved between the prepreg and the side sealing sheets, and there is an edge effect. If measures are not taken, gas flowing along the edges of the pregreg 10 and side sealing sheets 133 will affect accuracy of the gas permeability. Hence, an organic silica gel is used here to bind the prepreg 10 together with the side sealing sheets 133 to effectively eradicate the edge effect and provide high precision of the testing results. A porous material 134 is provided at both ends of the plastic matrix of the prepreg 10, wherein a thickness of the porous material 134 and the side sealing sheets 133 should be equivalent to the plastic matrix's thickness of the pregreg 10, wherein the porous material 134 is preferably a gas-permeable felt with a certain thickness. Then, the upper sealing sheet 131, the sealing cover plate 12 and the loading flat panel 21 are placed in turn as shown in Fig.4, the locking bolts 112 are screwed tightly to fix the sealing cover plate 12 to the cavity 11. The locking bolts 112 are used to apply compression to the upper and lower sealing sheets 131, 132 to divide the cavity 11 into two independent subcavities. Finally, a sealing adhesive tape is used to seal gaps between the sealing cover plate 12 and the cavity 11 and between the locking bolts 112 and the sealing cover plate 12, and meanwhile the sealing adhesive tape is used to seal the gaps between the sealing sheets and the cavity 11 at the recess 122 to ensure no leakage of the cavity 11.

Cavity leakage testing

The gas inlet 123 of the duly-packaged sealing cover plate 12 is sealed, and the gas outlet 124 is connected to the vacuum gauge 5 and the vacuum pump 6 via the gas duct 7. Then, the vacuum pump 6 is started, and the sealing adhesive tape is inspected and pressed tightly. When the vacuum gauge 5 displays a value up to -0.1 MPa, the vacuum pump 6 is switched off, and whether the vacuum gauge 5 relieves pressure is checked. In the event of pressure relief, leakage point should be found out and sealed by the sealing adhesive tape. Such operations are repeated for many times until the vacuum gauge 5 does not relieve pressure after the vacuum pump 6 is switched off, and then the gas permeability testing can be performed.

Testing of the thickness of the prepreg plastic matrix

The loading flat panel 21 directly presses the upper sealing sheet 131 in the cavity 11, and the upper and lower sealing sheets 131, 132 are pressurized by the loading body via the loading flat panel 21. When a predetermined pressure is reached, a dial indicator is adjusted and fixed to allow its contact head to contact the upper surface of the loading flat panel 21, and the dial indicator reads $h_0$.

After pressure relief, the loading flat panel 21 is moved away, the plastic matrix of the prepreg 10 is directly laid in the cavity 11 and the loading flat panel 21 is placed thereon. The prepreg 10 is pressurized by the loading body via the loading flat panel 21. When a predetermined pressure is reached, the contact head of the dial indicator is allowed to contact the upper surface of the loading flat panel 21, and the dial indicator reads $h_1$.

Under this pressure, the thickness h of the prepreg 10 is obtained by the formula $h = h_1 - h_0$.

Testing of permeability of the prepreg plastic matrix in the lateral direction

Referring to Fig.5, at first, the gas outlet 124 of the sealing cover plate 12 is connected to the vacuum gauge 5 and the vacuum pump 6 via the gas duct 7, and the gas inlet 123 is connected to the flow meter 4 via the gas duct 7.
Secondly, the loading device 2 is adjusted to control the testing pressure applied to the plastic matrix of the prepreg 10. In an embodiment of the present invention, the pressure is in a range of 0-0.6MPa;
Then, the temperature control device 3 is regulated to control a temperature T in the cavity 11. In an embodiment of the present invention, the temperature should not be below the room temperature and also not above 200°C;
Then, the vacuum pump 6 is started. A gas valve is used to regulate a vacuum pressure (-0.1-0MPa), and the vacuum meter 5 is used to accurately measure the vacuum pressure $P$;
Under a pressure gradient, air flows through the flow meter 4, the gas inlet 123, the porous material 134, the pregreg 10, and the gas outlet 124 in turn. A volume flow rate Q of air is tested through the flow meter 4, with a measure unit $m^3/s$.
Finally, permeability $K$ in a lateral direction may be obtained according to Darcy law, and it has a measure unit $m^2$.

The permeability in the lateral direction of the plastic matrix can be calculated by the formula: $K = \dfrac{Q\eta l}{Phb}$,

wherein the parameter $\eta$ represents gas viscosity with a measure unit Pa·s; the parameter $P$ represents an indication of the vacuum meter 5 with a measure unit Pa ; the parameters $l$ and $b$ respectively represent a length and a width of the plastic matrix of the prepreg 10; since the values of the parameters $l$ and $b$ are equal to each other, the formula for calculating the permeability in the lateral direction may be simplified as: $K = \dfrac{Q\eta}{Ph}$ .

By adjusting the loading device 2 and the temperature control device 3, and changing the pressure and temperature acting on the plastic matrix of the prepreg 10, the permeability of the prepreg 10 in the lateral direction is tested under different pressure and temperature conditions.

Air viscosity $\eta$ increases as the temperature T rises. When the temperature T is below 2000K, the gas viscosity may be calculated from Satran formula:

$$\frac{\eta}{\eta_0} = \left(\frac{T}{T_0}\right)^{\frac{3}{2}} \frac{T_0 + C}{T + C} .$$

Wherein in the formula, the parameter T represents the temperature under a testing condition with a measure unit K; the parameters $T_0$ and $\eta_0$ represent a reference temperature (K) and a corresponding viscosity respectively; the parameter C represents a constant related to a gas type, and the constant of air C is 110.4K. Air viscosity under partial temperatures is listed in Table 1 below.

Table 1: Air Viscosity under Different Temperature Conditions

| Temperature (°C) | Viscosity ($10^{-6}$Pa·S) |
| --- | --- |
| 0 | 16.8 |
| 10 | 17.3 |
| 15 | 17.8 |
| 20 | 18.0 |
| 40 | 19.1 |
| 60 | 20.3 |
| 80 | 21.5 |
| 100 | 22.8 |

A volume of gas is greatly affected by the temperature. The flow meter 4 measures a gas flow under the measurement value of the temperature $T_0$. When the temperature of the testing mold is T, the gas flow under this temperature condition may be calculated by using a modification formula

$$Q = \frac{T}{T_0} Q_0 .$$

Embodiment 1:

In the present embodiment, the carbon fiber/epoxy 914 resin fabric prepreg is used as a testing object. The pregreg is cut into pieces with a size $10 \times 10\text{cm}^2$, and seven layers of the pieces are laid. The loading device is used to apply a  load to the prepreg plastic matrix, and then the gas permeability of the prepreg plastic matrix in the lateral direction is measured under different pressure conditions. At the testing temperature 20°C, the air viscosity is $18 \times 10^{-6}$Pa·S. The testing results are shown in Fig.6.

Embodiment 2:

In the present embodiment, the T700 carbon fiber/ bismaleimide resin uni-directional prepreg is used as a testing object. The pregreg is cut into pieces with a size $10 \times 10\text{cm}^2$, and 16 layers of the pieces are laid. The laying manner is uni-directional laying. The loading device is used to apply a load to the prepreg plastic matrix, and then the gas permeability of the prepreg plastic matrix in the lateral direction is measured under different pressure conditions. At the testing temperature 20°C, the air viscosity is $18 \times 10^{-6}$Pa·S. The testing results are shown in Fig.7.

Embodiment 3:

In the present embodiment, the carbon fiber/epoxy 914 resin fabric prepreg is used as a testing object. The pregreg is cut into pieces with a size $10\times10cm^2$, and seven layers of the pieces are laid. The loading device is used to apply a 0.14MPa pressure to the prepreg plastic matrix, and then the gas permeability of the prepreg plastic matrix in the lateral direction is measured under different temperature conditions. The testing results are shown in Table 2 below.

Table 2: Gas Permeability of the Prepreg Plastic matrix in the Lateral Direction under Different Temperature Conditions

| Temperature (°C) | Gas permeability in the lateral direction (10-11m$^2$) |
|---|---|
| 20 | 2.45 |
| 30 | 2.21 |
| 40 | 2.10 |
| 50 | 1.97 |
| 60 | 1.81 |
| 70 | 1.77 |
| 80 | - |

In the above embodiments, the range of the testing pressure varies. For example, in embodiment 1, the testing pressure may reach 1 MPa, while the testing pressure in embodiment 2 may reach 1.5MPa. Those skilled in the art may appreciate that the pressure range upon application of the present invention for testing is not limited to 0-0.6MPa, and the testing may be performed in a broader pressure range according to the loading capability of the loading device. In addition, the testing temperature range in the present invention is from room temperature to 200°C. This is because a cooling system is not additionally provided in the present invention and a temperature upper limit of the testing instruments is 200°C. However, those skilled in the art may appreciate that so long as the testing instrument permits, the present invention may test permeability in a broader temperature range.

The present invention is not, in any form, limited to exemplary embodiments presented in the description and drawings. Many variations are possible within the scope of the present invention as generalized by the appended claim set. In addition, any reference signs in the claim set shall not be construed as limiting the scope of the present invention.

## Claims

1. A testing apparatus for testing gas permeability in a lateral direction of a plastic matrix, comprising: a mold at least including a cavity and a cover plate, a loading device for controlling a testing pressure, a temperature control device for controlling a testing temperature, a vacuum device for vaccumizing the cavity, and a flow detection element for detecting a gas flow, wherein the cover plate has an opening for receiving the loading device, the cavity and the cover plate forming an inner cavity, a sealing assembly being placed in the inner cavity and sealing the opening of the cover plate, a to-be-tested sample being laid flat between the sealing assembly and sealed airtight by the sealing assembly except both ends of the sample in the lateral direction of the plastic matrix, a gas inlet and a gas outlet being respectively arranged on the mold and corresponding to said both ends of the sample not being sealed airtight; wherein the gas inlet is communicated with the flow detection element and the gas outlet is communicated with the vacuum device, after the vacuum device is started to make the pressure at the gas inlet higher than the pressure at the gas outlet, gas flowing from the gas inlet, through the sample in the lateral direction of the plastic matrix of the sample, and then out of the gas outlet.

2. The testing apparatus according to claim 1, wherein the control temperature device at least comprises a heating rod.

3. The testing apparatus according to claim 1, wherein the vacuum device is a vacuum pump.

4. The testing apparatus according to claim 3, wherein a vacuum gauge is provided between the vacuum pump and the gas outlet.

5. The testing apparatus according to claim 1, wherein the gas inlet and the gas outlet are provided on the cover plate, and the cover plate is fixed in the cavity.

**6.** The testing apparatus according to claim 1, wherein the sealing assembly comprises an upper sealing sheet and a lower sealing sheet.

**7.** The testing apparatus according to claim 1, wherein the sealing assembly comprises an upper sealing sheet, a lower sealing sheet and a pair of side sealing sheets located between the upper sealing sheet and the lower sealing sheet.

**8.** The testing apparatus according to claim 7, wherein the mold further comprises a porous material which is provided between the upper sealing sheet and the lower sealing sheet in an up-down direction and corresponds to said both ends of the sample not being sealed airtight in the lateral direction of the plastic matrix, and wherein the porous material is provided between the side sealing sheets in the lateral direction of the plastic matrix.

**9.** The testing apparatus according to claim 8, wherein the porous material is a gas-permeable felt.

**10.** The testing apparatus according to claim 1, wherein the loading device has a loading flat panel and a loading body, wherein the loading flat panel is received in the opening of the cover plate, and the loading body applies a pressure to the loading flat panel.

**11.** The testing apparatus according to claim 1, wherein the loading body is a press machine.

**12.** The testing apparatus according to claim 1, wherein recesses are provided respectively on both sides of the sealing assembly and the cover plate at a location adjacent to two side surfaces of an inner wall of the cavity.

**13.** The testing apparatus according to claim 1, wherein the to-be-tested sample is a prepreg.

**14.** The testing apparatus according to claim 1, wherein the to-be-tested sample is laid between the sealing assembly in a uni-directional laying manner, orthogonal laying manner, or a quasi-isotropic laying manner.

**15.** A method of measuring gas permeability by using the testing apparatus according to any one of claims 1-14, comprising the following steps:

(1) sealing the gas inlet of the mold and starting the vacuum device communicated with the gas outlet of the mold to inspect whether there is gas leakage;
(2) applying a testing pressure to the sealing assembly with and without the to-be-tested sample by the loading device respectively and measuring a thickness h of the sample under the testing pressure, if the inspection result in step (1) is no gas leakage;
(3) setting a pressure of the vacuum device as P to form a differential pressure between the gas outlet and the gas inlet to enable the gas to flow, setting the pressure of the sample as a testing pressure corresponding to the thickness h of step (2) via the loading device, setting a temperature of the cavity as a testing temperature T via the temperature control device and obtaining a corresponding gas viscosity $\eta$ according to a temperature-viscosity calculating formula, and detecting a gas flow rate Q via the flow detection element;
(4) calculating the permeability in the lateral direction according to a permeability calculating formula.

**16.**

The method according to claim 15, wherein the temperature-viscosity formula is $\dfrac{\eta}{\eta_0} = \left(\dfrac{T}{T_0}\right)^{\frac{3}{2}} \dfrac{T_0 + C}{T + C}$, wherein the parameters $T_0$ and $\eta_0$ respectively represent a reference temperature and a corresponding viscosity, and the parameter C represents a constant related to a gas type.

**17.**

The method according to claim 15, wherein the permeability calculat-ing formula is $K = \dfrac{Q\eta l}{Phb}$, wherein the parameters $l$ and $b$ respectively represent a length and a width of the pavement of the sample.

**18.** The method according to claim 15, wherein the step (1) further comprises a step of using a sealing adhesive tape to seal gaps between the sealing assembly and the cavity.

19. The method according to claim 15, wherein in the step (1), the vacuum device sets the pressure of the cavity as -0.1MPa; if no pressure relief occurs after the vacuum device is switched off, there is no gas leakage.

20. The method according to claim 15, wherein in the step (2), if a thickness as measured in a way that the loading device applies a pressure to the sealing assembly without the sample is set as h1 and a thickness as measured in a way that the loading device applies a pressure to the cavity with the sample is set as h2, the thickness h of the sample is h2-h1.

21. The method according to claim 15, wherein in the step (3), a pressure P of the vacuum device is in a range of -0.1-0MPa.

**Fig. 1**

**Fig. 2**

**Fig. 3**

**Fig. 4**

**Fig. 5**

**Fig. 6**

**Fig. 7**

<div style="text-align:center">**INTERNATIONAL SEARCH REPORT**</div>

| | |
|---|---|
| | International application No. |
| | PCT/CN2011/085123 |

**A. CLASSIFICATION OF SUBJECT MATTER**

G01N15/08（2006.01）i

According to International Patent Classification (IPC) or to both national classification and IPC

**B. FIELDS SEARCHED**

Minimum documentation searched (classification system followed by classification symbols)

IPC：G01N

Documentation searched other than minimum documentation to the extent that such documents are included in the fields searched

Electronic data base consulted during the international search (name of data base and, where practicable, search terms used)

VEN，CNTXT，CPRSABS，CJFD： permeabilit+, vacuum+, gas+, air+, press+, load+

**C. DOCUMENTS CONSIDERED TO BE RELEVANT**

| Category* | Citation of document, with indication, where appropriate, of the relevant passages | Relevant to claim No. |
|---|---|---|
| P，X | CN102183444A（COMML AIRCRAFT CORP CHINA LTD et al）14 Sep. 2011（14.09.2011）claims 1-21 | 1-21 |
| A | CN1510398A（MATSUSHITA ELECTRIC IND CO LTD）07 Jul. 2004（07.07.2004）whole document | 1-21 |
| A | CN2134650Y（LIGHT INDUSTRY DEPARTMENT FUZH）26 May 1993（26.05.1993）whole document | 1-21 |
| A | JP2005-345342A（TAKAO KK）15 Dec. 2005（15.12.2005）whole document | 1-21 |
| A | SU516947A1（MOSCOW MEAT DAIRY INST）16 Jun. 1977（16.06.1977）whole document | 1-21 |
| A | US2003/0074954A1（BRIGHT C I et al）24 Apr. 2003（24.04.2003）whole document | 1-21 |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
|---|---|
| 23 Mar. 2012（23.03.2012） | 05 Apr. 2012（05.04.2012） |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br><br>　　　　　　YANG, Lisha<br>Telephone No. (86-10) 62085661 |

Form PCT/ISA/210 (second sheet) (July 2009)

## INTERNATIONAL SEARCH REPORT
Information on patent family members

| International application No. |
|---|
| PCT/CN2011/085123 |

| Patent Documents referred in the Report | Publication Date | Patent Family | Publication Date |
|---|---|---|---|
| CN102183444A | 14.09.2011 | None | |
| CN1510398A | 07.07.2004 | US2004123646A1 | 01.07.2004 |
| | | SG123584A1 | 26.07.2006 |
| | | JP2004219407A | 05.08.204 |
| | | KR20040058057A | 03.07.2004 |
| | | TW200422604A | 01.11.2004 |
| CN2134650Y | 26.05.1993 | None | |
| JP2005-345342A | 15.12.2005 | JP3930871B2 | 13.06.2007 |
| SU516947A1 | 16.06.1977 | None | |
| US2003/0074954A1 | 24.04.2003 | US6766682B2 | 27.07.2004 |

Form PCT/ISA /210 (patent family annex) (July 2009)